# EUROPÄISCHE PATENTSCHRIFT

(11) **EP 3 171 043 B1**
(45) Veröffentlichungstag und Bekanntmachung des Hinweises auf die Patenterteilung: **09.05.2018**
(21) Anmeldenummer: 16196875.5
(22) Anmeldetag: 02.11.2016
(51) Int. Cl.: F16B 35/00, E03C 1/04

(54) **KÜCHENARMATUR**
KITCHEN FITTING
ROBINETTERIE DE CUISINE

(30) Priorität: 17.11.2015 DE 102015119857
(43) Veröffentlichungstag der Anmeldung: 24.05.2017
(73) Patentinhaber: Franke Water Systems AG, 5726 Unterkulm (CH)
(72) Erfinder: Kirchmann, Heinz, 58644 Iserlohn (DE)
(74) Vertreter: Lemcke, Brommer & Partner Patentanwälte Partnerschaft mbB

(56) Entgegenhaltungen:
- DE-A1- 10 243 304
- DE-C1- 4 102 132

## Beschreibung

Die vorliegende Erfindung betrifft eine Küchenarmatur mit einem Armaturenkorpus und einem Auslauf, der schwenkbar auf dem Armaturenkorpus befestigt ist, und mit einem Begrenzungsring, welcher drehfest an dem Auslauf festlegbar ist, um einen Schwenkbereich des Auslaufs gegenüber dem Armaturenkorpus zu begrenzen.

Insbesondere im Bereich der Gastronomieküchen werden Armaturen verbaut, deren Auslauf frei schwenkbar ist, und zwar in der Regel um volle 360°. Die Planung von Großküchen unterliegt technischen Regeln und Vorschriften, welche über DVGW-Arbeitsblätter, DIN-Vorschriften sowie VDE-Richtlinien festgelegt sind. Unter anderem sollen Spül- und Kochbereiche räumlich getrennt sein, damit kein Wasser aus dem Spülbereich auf heiße Kochbereiche gelangen kann. Je nach Platzbedarf und Ausstattung können diese Anforderungen jedoch nicht immer eingehalten werden. Kommt es zu einer planungsbedingten Zusammenlegung von Spül- und Kochbereich, so muss jedenfalls sichergestellt werden, dass kein Wasser über die Armatur auf das Kochfeld gelangen kann. Es muss also insbesondere verhindert werden, dass der Auslauf einer Küchenarmatur über ein Kochfeld geschwenkt werden kann. Soweit im Stand der Technik eine Begrenzung des Schwenkbereichs für den Auslauf einer Küchenarmatur vorgesehen war, wurde diese als aufwändige und kostenintensive Sonderanfertigung angeboten und realisiert.

Die DE 102 43 304 A1 zeigt eine Sanitärarmaturen mit Schwenkauslauf, bei der zwischen Armaturensockel und Auslauf ein integrierter Einsatz angeordnet ist, der die Verschwenkung begrenzt. Der Einsatz kann mit einem der beiden Teile in einer von mehreren Winkelpositionen verbunden werden. Dadurch ist es möglich, die Nullposition des Schwenkbereichs gegenüber dem Sockel zu verstellen.

Die DE 41 02 132 C1 zeigt eine Sanitärarmatur mit einem Schwenkauslauf, bei der der Schwenkbereich durch innerhalb von Auslauf und Armaturengehäuse angeordnete Anschlagstücke begrenzt wird. Ein erstes Anschlagstück ist gemeinsam mit dem Schwenkauslauf verschwenkbar und wirkt mit einem zweiten Anschlagstück zusammen, welches gegenüber dem Armaturengehäuse feststeht. Eines der beiden Anschlagstücke ist in zwei Teile unterteilbar, die beide unabhängig voneinander in unterschiedlichen Winkelpositionen an einer mit dem Armaturengehäuse verschraubten Aufnahme festlegbar sind, sodass sich der Schwenkwinkel des Schwenkauslaufes einstellen lässt.

Es ist eine Aufgabe der vorliegenden Erfindung, eine Küchenarmatur anzugeben, bei der auf einfache Weise der Schwenkbereich des Auslaufs begrenzt werden kann. Überdies ist eine Aufgabe der vorliegenden Erfindung, eine Lösung zum Nachrüsten vorhandener Küchenarmaturen in Form eines Begrenzersatzes anzugeben, mit dem der Schwenkbereich des Auslaufs begrenzt werden kann.

Die Aufgabe wird hinsichtlich der Armatur gelöst durch die Merkmale des Anspruchs 1 und hinsichtlich des nachrüstbaren Begrenzersatzes durch die Merkmale des Anspruchs 13. Vorteilhafte Ausgestaltungen sind den abhängigen Ansprüchen zu entnehmen.

Erfindungsgemäß wird bei einer Küchenarmatur mit einem Armaturenkorpus und einem Auslauf, der mittels einer Überwurfmutter schwenkbar auf dem Armaturenkorpus befestigt ist, eine Begrenzung des Schwenkbereichs dadurch erreicht, dass auf dem Auslauf ein Begrenzungsring aufgeschoben ist, welcher drehfest an dem Auslauf festlegbar ist und mit der Überwurfmutter zusammenwirkt, um den Schwenkbereich zu begrenzen.

Ein besonderer Vorteil der erfindungsgemäßen Lösung, welche eine Begrenzung des Schwenkbereichs durch ein Zusammenwirken der ohnehin zur Befestigung des Auslaufs erforderlichen Überwurfmutter und einem zusätzlichen, auf den Auslauf aufgeschobenen Begrenzungsring vorsieht, besteht darin, dass bei der Montage der Armatur der Schwenkbereich auf einfache Weise eingestellt werden kann. Hierzu muss lediglich der Begrenzungsring gegenüber der Befestigungsmutter in eine Anschlagstellung und der Auslauf in eine maximal zulässige Auslenkung gedreht werden; anschließend kann der Begrenzungsring gegenüber dem Auslauf arretiert werden, sodass der Auslauf im Endanschlag des Begrenzungsrings seine Begrenzung des Schwenkbereichs erfährt.

Vorzugsweise ist vorgesehen, dass entweder an der Überwurfmutter oder an dem Begrenzungsring auf einem Teilkreis eine Mehrzahl Aufnahmen zum wahlweisen Einsetzen mindestens eines Anschlagkörpers vorgesehen sind, wobei durch Auswahl der Aufnahme für den mindestens einen Anschlagkörper der Schwenkbereich variierbar ist. Beispielsweise kann an der Stirnseite der Überwurfmutter ein erster fester Anschlagkörper angeordnet sein und ein zweiter Anschlagkörper kann in eine der mehreren an der Überwurfmutter vorgesehenen Aufnahmen eingesetzt werden, um einen Winkelbereich vorzugeben, innerhalb dem der Auslauf schwenkbar sein soll. Selbstverständlich können auch beide Anschlagkörper variabel in die entlang des Teilkreises angeordneten Aufnahmen eingesetzt werden. Ebenso ist es möglich, Aufnahmen und Anschlagkörper statt an der Stirnseite der Überwurfmutter an der der Überwurfmutter zugewandten Seite des Begrenzungsrings anzuordnen. An dem jeweils entgegengesetzten Bauteil, also Überwurfmutter oder Begrenzungsring, sind jeweils Widerlager für die Anschlagkörper angeordnet, an denen die Anschlagkörper einen Endanschlag finden. Diese Widerlager können ebenfalls als in Aufnahmen eingesetzte Anschlagkörper ausgebildet sein. Sie können jedoch auch einstückig an dem betreffenden Bauteil ausgeformt sein, beispielsweise in der Art einer Kulissenbahn.

Insbesondere ist es möglich, sowohl an der Überwurfmutter als auch an der der Überwurfmutter zugewandten Seite des Begrenzungsrings Anschlagkörper vorzusehen, die so angeordnet sind, dass sie den Schwenkbereich des Auslaufs begrenzen, indem sie einen beiderseitigen Endanschlag des Schwenkbereichs bilden.

Insbesondere ist nach einer Ausführungsform der Erfindung vorgesehen, dass sowohl die Überwurfmutter als auch der Begrenzungsring jeweils zwei korrespondierende Anschlagkörper aufweisen und zumindest einer der Anschlagkörper, vorzugsweise beide am selben Bauteil befindliche Anschlagkörper, wahlweise in ausgewählte Aufnahmen in einer Mehrzahl auf dem Teilkreis angeordneter Aufnahmen einsetzbar sind, um den Winkelbereich vorzugeben, innerhalb dessen der Auslauf schwenkbar sein soll.

Auf besonders einfache Weise lassen sich die Anschlagkörper durch Gewindestifte realisieren, die in eine mit Innengewinde versehene Aufnahme eingesetzt werden. Es liegt somit im Rahmen der vorliegenden Erfindung, dass mindestens ein Anschlagkörper vorgesehen ist, der als Gewindestift ausgebildet ist.

Bei einer anderen vorteilhaften Weiterbildung der Erfindung ist die Überwurfmutter mit einer Sicherungseinrichtung versehen, mit der die Überwurfmutter nach dem Aufschrauben auf den Armaturenkorpus gegen unbeabsichtigtes Verdrehen gesichert werden kann. Eine solche Sicherungseinrichtung kann beispielsweise mittels einer radial eingesetzten Sicherungsschraube realisiert werden, welche beim Einschrauben auf dem Außengewinde des Armaturenkorpus festklemmt und ein weiteres Drehen der Überwurfmutter unterbindet. Auf diese Weise wird sichergestellt, dass nicht durch ein gewaltsames Schwenken des Auslaufs über den von Überwurfmutter und Begrenzungsring vorgegebenen Schwenkbereich hinaus die Überwurfmutter vom Armaturenkorpus losgedreht werden kann.

Zur drehfesten Festlegung des Begrenzungsrings an dem Auslauf kann bei einer Ausführungsform der Erfindung eine in den Begrenzungsring eingesetzte Sicherungsschraube, die den Begrenzungsring radial durchdringt, verwendet werden. Eine solche Sicherungsschraube kann beispielsweise eine Madenschraube bzw. ein Gewindestift sein. Um die bei längeren Ausläufen, wie sie im Gastrobereich häufig anzutreffen sind, auftretenden Schwenkkräften aufzunehmen, kann es vorteilhaft sein, zumindest zwei radial angeordnete Sicherungsschrauben vorzusehen, die um einen Winkel von etwa 60 bis 150° versetzt zueinander in den Begrenzungsring eingeschraubt werden.

Alternativ oder kumulativ zu einer oder mehrerer radial durch den Begrenzungsring verlaufender Sicherungsschrauben kann der Begrenzungsring auch radial oder schräg in Richtung des Innenumfangs verlaufend geschlitzt sein und zur drehfesten Festlegung an dem Auslauf eine durch den Schlitz verlaufende Spannschraube aufweisen. Dies hat den Vorteil, dass der Innenumfang des Begrenzungsrings etwas größer als der Außendurchmesser des Auslaufs ausgeführt werden kann, sodass der Begrenzungsring auch leicht über gebogene Abschnitte des Auslaufs geschoben werden kann. Allerdings ist auch hier vorteilhaft, zur Aufnahme größerer Schwenkkräfte, die insbesondere bei einem längeren Auslauf auftreten, zusätzlich zu der durch den Schlitz verlaufenden Spannschraube zumindest eine radial verlaufende Sicherungsschraube zu verwenden.

Üblicherweise ist zwischen Auslauf und Armaturenkorpus eine Dichtung vorgesehen, deren Dichtungsspiel bzw. Vorspannung durch ein entsprechendes Anzugsmoment der Überwurfmutter eingestellt wird. Wird eine solche Dichtung undicht und beginnt zu tropfen, so kann die Dichtung bzw. das Dichtungsspiel durch ein Nachziehen der Überwurfmutter nachgestellt werden. Da im Rahmen der vorliegenden Erfindung jedoch vorzugsweise eine Sicherung der Überwurfmutter gegen Verdrehen vorgesehen ist und da bei einem Nachstellen der Überwurfmutter der Schwenkbereich des Auslaufs verstellt würde, ist bei einer bevorzugten Weiterbildung der vorliegenden Erfindung vorgesehen, dass an der Überwurfmutter eine oder mehrere die Überwurfmutter durchdringende Stellschrauben vorgesehen sind, mit denen das Dichtungsspiel nachgestellt werden kann. Vorzugsweise ist die Dichtung hierzu als Stopfbuchsendichtung, insbesondere aus Teflon, ausgeführt. Eine solche Stopfbuchsendichtung hat gegenüber eine- O-Ring-Dichtung den Vorteil, dass sie gegebenenfalls mehrfach nachgestellt werden kann.

Aus hygienischen Gründen, aber auch aus Sicherheitsgründen kann zusätzlich eine Rosette vorgesehen sein, welche die Überwurfmutter und den Begrenzungsring überdeckt. Vorzugsweise wird die Rosette gegenüber dem Auslauf mittels einer Ringdichtung, beispielsweise einem O-Ring, gegen eindringende Flüssigkeit gedichtet.

In einem weiteren Aspekt betrifft die vorliegende Erfindung einen nachrüstbaren Begrenzersatz zur Begrenzung des Schwenkbereichs eines schwenkbar auf einem Armaturenkorpus befestigten Auslaufes, insbesondere für eine Armatur wie vorstehend beschrieben. Der Begrenzersatz umfasst eine Überwurfmutter, mittels der der Auslauf auf dem Armaturenkorpus befestigbar ist, sowie einen auf den Auslauf aufschiebbaren Begrenzungsring, welcher drehfest an dem Auslauf festlegbar ist und mit der Überwurfmutter zusammenwirkt, um den Schwenkbereich zu begrenzen. Mit einem solchen Begrenzersatz können vorhandene Armaturen nachgerüstet werden, um deren Schwenkbereich nachträglich zu begrenzen. Hierzu muss lediglich die vorhandene Überwurfmutter, mit der der Auslauf auf dem Armaturenkorpus befestigt ist, durch die Überwurfmutter des Begrenzersatzes ausgetauscht und zusätzlich der Begrenzungsring auf den Auslauf aufgeschoben und in der passenden Winkelstellung gegenüber dem Auslauf arretiert werden.

Weitere Vorteile und Eigenschaften der vorliegenden Erfindung ergeben sich anhand der Ausführungsbeispiele und der beigefügten Zeichnungen. Hierbei zeigen:
- Figur 1: eine herkömmliche Küchenarmatur mit Zweigriffmischer und schwenkbarem Auslauf,
- Figur 2: eine Explosionszeichnung von Auslauf und Armaturenkorpus der Küchenarmatur aus Figur 1,
- Figur 3: in einer isometrischen Ansicht die Hauptbauteile eines Begrenzersatzes zur Begrenzung des Schwenkbereichs des Auslaufs einer Küchenarmatur wie in Figur 1 gezeigt,
- Figur 4: eine Explosionszeichnung des Auslaufbegrenzers aus Figur 3 mit allen erforderlichen Bauteilen,
- Figur 5: einen Längsschnitt durch den zusammengebauten Auslaufbegrenzer aus den Figuren 3 und 4, und
- Figur 6: ein zweites Ausführungsbeispiel eines Begrenzersatzes in einer Explosionszeichnung.

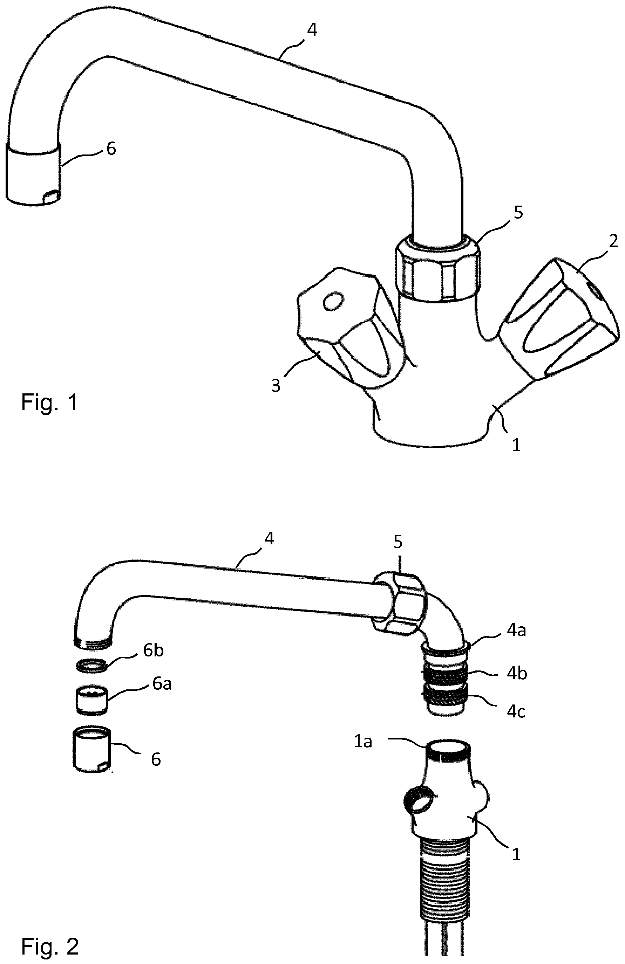

Eine typische Küchenarmatur mit Zweigriffmischer ist in Figur 1 schematisch dargestellt. Sie weist einen Armaturenkorpus 1 mit zwei seitlich angeordneten Drehgriffen 2, 3 für Warm- und Kaltwasser sowie einen Auslauf 4 auf, der mit dem Armaturenkorpus 1 mittels einer Überwurfmutter 5 frei schwenkbar verschraubt ist. Auf die Mündung des Auslaufs ist ein Strahlregler 6 aufgeschraubt. Unter den aufgesteckten Drehgriffen 2, 3 sind in den Armaturenkorpus 1 jeweils Ventileinsätze (nicht gezeigt) herkömmlicher Bauart eingesetzt, bei denen es sich beispielsweise um Teller- bzw. Sitzventile handeln kann.

Die Befestigung des Auslaufs 4 auf dem Armaturenkorpus 1 ist in Figur 2 näher gezeigt. Der Armaturenkorpus 1 weist an seinem oberen Ende eine Öffnung mit Außengewinde 1a auf, in welche der Endabschnitt des Auslaufs 4 eingesteckt wird. In diesem Bereich ist an dem Auslauf 4 ein Kragen 4a angeformt, über den die Überwurfmutter 5 gestülpt und mit dem der Auslauf 4 auf dem Armaturenkorpus 1 gehalten wird. Unter dem Kragen 4a befindet sich im Endbereich des Auslaufs 4 eine Dichtung, die im vorliegenden Fall als Stopfbuchsendichtung ausgeführt ist. Die Stopfbuchsendichtung umfasst eine Hülse 4b als Stopfbuchsbrille und eine darunter angeordnete Stopfbuchspackung 4c, welche aus Teflon oder alternativ einem Gewebe oder Filz bestehen kann. Wird der Auslauf 4 mit der Überwurfmutter 5 auf dem Außengewinde 1a des Armaturenkorpus 1 aufgeschraubt, so drückt der Kragen 4a über die Hülse 4b die Stopfbuchspackung 4c zusammen. Durch die axiale Pressung entsteht auch eine radiale Pressung der Stopfbuchspackung 4c zwischen dem Außenumfang des Auslaufs 4 und der im Armaturenkorpus 1 ausgebildeten Aufnahme, sodass der Auslauf 4 gegenüber dem Armaturengehäuse 1 gedichtet wird. Die Vorspannung der Stopfbuchspackung kann durch Anziehung der Überwurfmutter 5 eingestellt bzw. nachgestellt werden.

Der auf die Mündung des Auslaufs 4 aufgeschraubte Strahlregler 6 weist in an sich üblicher Weise ein Mundstück mit einem Innenteil 6a und einer zugehörigen Dichtung 6b auf.

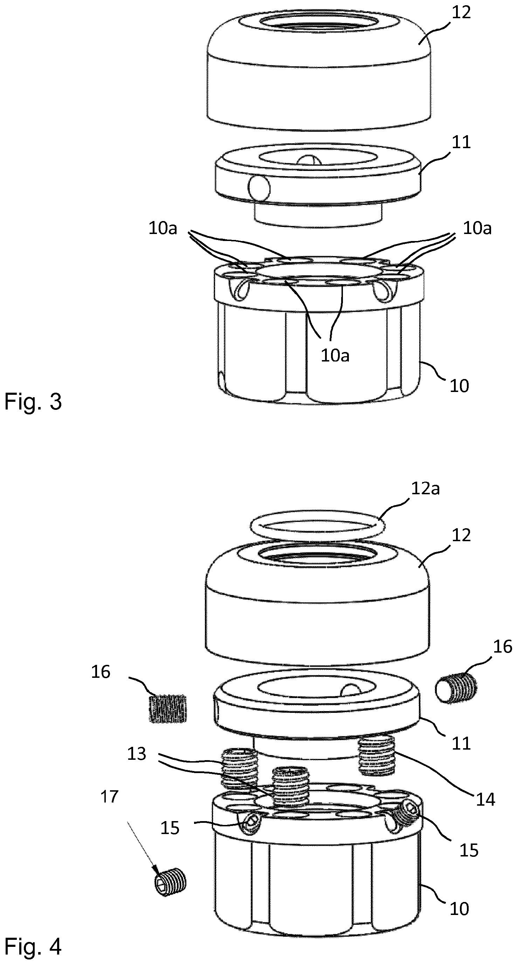

Bei einer solchen an sich bekannten Küchenarmatur kommt nun die erfindungsgemäße Begrenzung für den Schwenkbereich des Auslaufs 4 zum Einsatz. Die Hauptbauteile eines entsprechenden Auslaufbegrenzers bzw. Begrenzersatzes, der bei der Armatur in Figur 1 nachgerüstet werden kann, sind in Figur 3 gezeigt. Der Auslaufbegrenzer umfasst eine Überwurfmutter 10, mit der der Auslauf 4 auf dem Armaturenkorpus 1 aufgeschraubt wird, einen Begrenzungsring 11, welcher auf den Auslauf 4 aufgeschoben und gegenüber diesem drehfest arretiert wird, sowie eine Rosette 12, die über Begrenzungsring 11 und Überwurfmutter 10 geschoben wird. An ihrer Umfangsseite ist die Überwurfmutter 10 profiliert, um ein Angreifen mit einem Werkzeug wie etwa einer Rohrzange zu ermöglichen. An ihrer oberen Stirnfläche weist die Überwurfmutter 10 insgesamt acht als Gewindebohrungen M8 ausgeführte Aufnahmen 10a auf, in welche zur Vorgabe des Schwenkwinkelbereichs wahlweise zwei Gewindestifte als Anschlagkörper eingeschraubt werden können. Am oberen Außenrand der Gewindemutter 10 sind insgesamt vier Einsenkungen mit Gewindebohrungen M5 angeordnet, in die Stellschrauben 15 (siehe Fig. 2) zum Nachstellen der Vorspannung der Stopfbuchsendichtung eingeschraubt werden können.

Der Begrenzungsring 11, welcher auf den Auslauf 4 aufgeschoben wird, weist zwei radial verlaufende Gewindebohrungen 11a der Größe M6 auf, in die entsprechende Gewindestifte als Sicherungsschrauben eingeschraubt werden, mit denen der Begrenzungsring 11 drehfest auf dem Auslauf 4 arretiert wird. An seiner zu der Überwurfmutter 10 weisenden Unterseite hat der Begrenzungsring 11 ebenfalls zwei Gewindebohrungen M8, die in der Zeichnung jedoch verdeckt sind. Diese dienen als Aufnahmen für Gewindestifte, welche als Anschlagkörper zusammen mit den in ausgewählte Aufnahmen 10a der Überwurfmutter 10 eingesetzte Gewindestifte jeweils einen Endanschlag für den Schwenkbereich des Auslaufs 4 bilden.

In der in Figur 4 gezeigten Explosionszeichnung des Begrenzersatzes sind zusätzlich die als Anschlagkörper dienenden Gewindestifte 13 und 14, die Stellschrauben 15 zum Nachstellen der Dichtungsspannung sowie die Sicherungsschrauben 16 zum Festlegen des Begrenzungsrings 11 am Auslauf 4 gezeigt. In eine Ringnut an der oberen Öffnung der Rosette 12 ist außerdem ein Dichtungsring 12a eingesetzt, welcher die Rosette 12 gegenüber dem Auslauf 4 dichtet. Mittels einer Sicherungsschraube 17 der Größe M6, welche in eine radial verlaufende Gewindebohrung (nicht gezeigt) in der profilierten Umfangsseite der Überwurfmutter 10 eingeschraubt wird, kann letztere gegen unbeabsichtigtes Verdrehen bzw. Losschrauben vom Außengewinde 1a des Armaturenkorpus 1 gesichert werden.

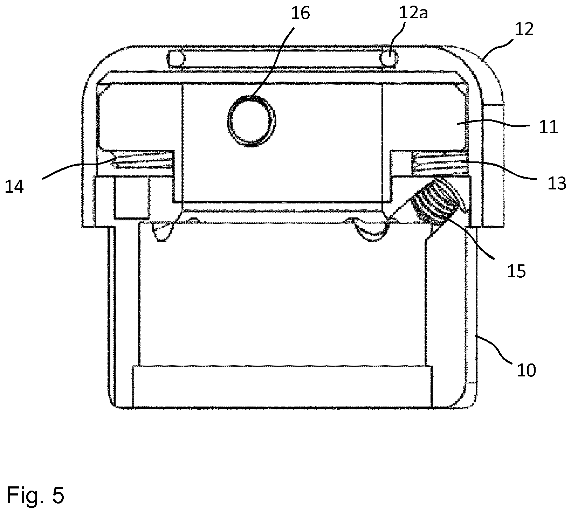

Ein Schnitt durch den zusammengebauten Begrenzersatz ist in Figur 5 gezeigt. Die in den Begrenzungsring 11 eingesetzten Gewindestifte 14, von denen hier nur einer zu sehen ist, sowie die in geeignete Gewindebohrungen 10a der Überwurfmutter 10 eingesetzten Gewindestifte 13, bilden gegenseitige Endanschläge, die den Schwenkbereich des Auslaufs 4 begrenzen. Vier von der oberen Außenkante der Überwurfmutter schräg nach innen ragende Stellschrauben 15 dienen dazu, die Vorspannung der Stopfbuchsendichtung 4b, 4c nachzustellen, indem ohne Nachziehen der Überwurfmutter 10 zusätzlicher Anpressdruck auf den Haltekragen 4a des Auslaufs 4 ausgeübt werden kann. Mit den Sicherungsschrauben 16 (hier nur eine zu sehen) wird der Begrenzungsring 11 drehfest am Auslauf 4 festgelegt. Die radial in die Überwurfmutter 10 eingesetzte Sicherungsschraube 17, mit der die Überwurfmutter 10 auf dem Außengewinde 1a des Armaturenkorpus 1 gegen Verdrehen gesichert wird, ist in der Schnittansicht der Figur 5 nicht zu sehen.

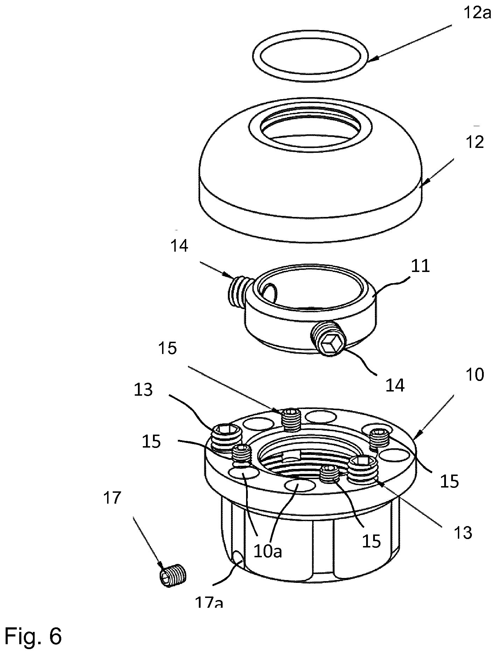

Ein zweites Ausführungsbeispiel für einen Begrenzersatz, der bei einer Küchenarmatur wie in Figur 1 gezeigt verbaut werden kann, ist in Figur 6 gezeigt. Gleiche und gleichwirkende Bauteile sind mit denselben Bezugszeichen wie im ersten Ausführungsbeispiel versehen. Im Unterschied zum ersten Ausführungsbeispiel ist hier vor allem der Begrenzungsring 11 deutlich schlanker ausgeführt und die Gewindestifte 14, mit denen in Zusammenwirkung mit den in die Überwurfmutter 10 eingesetzten Gewindestifte 13 der Schwenkbereich des Auslaufs 4 begrenzt wird, sind radial in dem Begrenzungsring 11 eingesetzt und dienen gleichzeitig als Sicherungsschrauben zur Arretierung des Begrenzungsrings am Auslauf 4. Darüber hinaus sind die Stellschrauben 15 zum Nachstellen der Stopfbuchsendichtung axial und von oben und auf einem kleineren Teilkreis, der in etwa den Abmessungen des am Auslauf 4 angeordneten Haltekragens 4a entspricht, in die Überwurfmutter 10 eingeschraubt. Die Sicherungsschraube 17 für die Überwurfmutter 10 wird in eine entsprechende axial verlaufende Gewindebohrung 17a eingeschraubt.

Wie aus den Zeichnungen ersichtlich, können die als Anschlagkörper dienenden Gewindestifte 13 in unterschiedliche der insgesamt acht Gewindebohrungen 10a in der Überwurfmutter 10 eingesetzt werden, wodurch unterschiedliche Winkelbereiche für den Schwenkbereich des Auslaufs 4 realisiert werden können. Im Begrenzungsring 11 können zwei als Anschlagkörper dienende Gewindestifte 14 oder auch nur ein einziger eingesetzt werden, was eine weitere Variation der möglichen Winkelbereiche ermöglicht.

Zur Montage des Begrenzersatzes wird die Überwurfmutter 5 der in Figur 1 gezeigten Armatur abgeschraubt und durch die Überwurfmutter 10 ersetzt. Anschließend wird auf den Auslauf 4 der Begrenzungsring 11 aufgeschoben, jedoch noch nicht mittels der Sicherungsschrauben 16 bzw. Gewindestifte 14 im Falle des zweiten Ausführungsbeispiels am Auslauf 4 arretiert. Nun wird der Auslauf 4 in eine maximal zulässige Endstellung verschwenkt und der Begrenzungsring 11 in eine Anschlagstellung gedreht. In dieser Stellung wird der Begrenzungsring 11 nun durch Anziehen der Sicherungsschrauben 16 bzw. Gewindestifte 14 im Falle des zweiten Ausführungsbeispiels auf dem Auslauf festgeklemmt. Anschließend wird die Rosette 12 übergeschoben. Diese ist so bemessen, dass sie gerade auf den oberen Abschlussring der Begrenzungsmutter 10 passt und dort durch Friktion selbsthaltend verbleibt. Der Dichtungsring 12a dichtet die Rosette 12 gleitend gegen den Außenumfang des Auslaufs 4 ab.

Verschiedene Abwandlungen von den hier gezeigten Ausführungsbeispielen liegen im Ermessen und Können des Fachmanns und sind im Rahmen der vorliegenden Erfindung mit umfasst. So können Anschlagkörper an Begrenzungsring und Überwurfmutter statt als Gewindestifte in beliebiger anderer Form, beispielsweise einstückig als Ansätze und Aussparungen, als Kulissenführung oder in anderer Weise realisiert werden. Die Arretierung des Begrenzungsrings kann auch dadurch erfolgen, dass letzterer radial oder schräg verlaufend geschlitzt ausgeführt und mittels einer Spannschraube um den Außenumfang des Auslaufs 4 festgespannt wird.

Die Erfindung wurde in den Ausführungsbeispielen anhand einer Zweigriffmischarmatur mit Sitzventilen erläutert. Sie ist aber nicht hierauf begrenzt sondern ebenso bei anderen Armaturen mit schwenkbarem Auslauf wie Armaturen mit Hebelmischer und keramischem Scheibenventil, elektrisch gesteuerten Armaturen, oder bei reinen Standventilen ohne Mischfunktion einsetzbar.

## Patentansprüche

1. Küchenarmatur mit einem Armaturenkorpus (1) und einem Auslauf (4), der schwenkbar auf dem Armaturenkorpus (1) befestigt ist, und mit einem Begrenzungsring (11), welcher drehfest an dem Auslauf (4) festlegbar ist, um einen Schwenkbereich des Auslaufs (4) gegenüber dem Armaturenkorpus (1) zu begrenzen,
**dadurch gekennzeichnet, dass**
der Auslauf (4) mittels einer Überwurfmutter (10) auf dem Armaturenkorpus (1) befestigt ist, und dass der Begrenzungsring (11) auf den Auslauf (4) aufgeschoben ist und mit der Überwurfmutter (10) zusammenwirkt, um den Schwenkbereich zu begrenzen.

2. Küchenarmatur nach Anspruch 1, bei der entweder an der Überwurfmutter (10) oder dem Begrenzungsring (11) eine Mehrzahl Aufnahmen (10a) zum wahlweisen Einsetzen mindestens eines Anschlagkörpers (13) vorgesehen sind, wobei durch Auswahl der Aufnahme (10a) für den mindestens einen Anschlagkörper (13) der Schwenkbereich variierbar ist.

3. Küchenarmatur nach Anspruch 1, bei der sowohl an der Überwurfmutter (10) als auch an der der Überwurfmutter (10) zugewandten Seite des Begrenzungsrings (11) Anschlagkörper (13, 14) vorgesehen sind, die angeordnet sind, den Schwenkbereich des Auslaufs (4) zu begrenzen, indem sie einen beiderseitigen Endanschlag des Schwenkbereichs bilden.

4. Küchenarmatur nach Anspruch 3, bei der sowohl die Überwurfmutter (10) als auch der Begrenzungsring (11) jeweils zwei korrespondierende Anschlagkörper (13, 14) aufweisen und zumindest einer der Anschlagkörper (13), vorzugsweise beide am selben Bauteil befindliche Anschlagkörper (13), wahlweise in ausgewählte Aufnahmen (10a) einer Mehrzahl auf einem Teilkreis angeordneter Aufnahmen (10a) einsetzbar sind, um einen Winkelbereich für den Schwenkbereich vorzugeben.

5. Küchenarmatur nach einem der Ansprüche 2 bis 4, bei der zumindest einer der Anschlagkörper (13, 14) als Gewindestift ausgebildet ist, der in eine mit Innengewinde versehene Aufnahme (10a) eingesetzt ist.

6. Küchenarmatur nach einem der vorangehenden Ansprüche, bei der die Überwurfmutter (10) mittels einer Sicherungseinrichtung, vorzugsweise einer radial eingesetzten Sicherungsschraube (17) gegen unbeabsichtigtes Verdrehen gesichert ist.

7. Küchenarmatur nach einem der vorangehenden Ansprüche, bei der der Begrenzungsring (11) zur drehfesten Festlegung an dem Auslauf (4) mindestens eine, vorzugsweise zwei radial den Begrenzungsring (11) durchdringende Sicherungsschrauben (16; 14) aufweist.

8. Küchenarmatur nach einem der Ansprüche 1 bis 6, bei der der Begrenzungsring radial oder schräg in Richtung seines Innenumfangs verlaufend geschlitzt ist und zur drehfesten Festlegung an dem Auslauf eine durch den Schlitz verlaufende Spannschraube aufweist.

9. Küchenarmatur nach einem der vorangehenden Ansprüche, bei der die Überwurfmutter (10) den Auslauf (4) gegen eine zwischen dem Auslauf (4) und dem Armaturenkorpus (1) befindliche Dichtung (4c) hält und bei der an der Überwurfmutter (10) ein oder mehrere die Überwurfmutter (10) durchdringende Stellschrauben (15) vorgesehen sind, mit denen ein mittels der Überwurfmutter (10) voreingestelltes Dichtungsspiel nachgestellt werden kann.

10. Küchenarmatur nach Anspruch 9, bei der die Dichtung (4c) als Stopfbuchspackung einer Stopfbuchsendichtung, vorzugsweise aus Teflon, ausgeführt ist.

11. Küchenarmatur nach einem der vorangehenden Ansprüche, mit einer die Überwurfmutter (10) und den Begrenzungsring (11) überdeckenden Rosette (12).

12. Küchenarmatur nach Anspruch 11, bei der die Rosette (12) gegenüber dem Auslauf (4) mittels einer Ringdichtung (12a), vorzugsweisen einem O-Ring, gegen eindringende Flüssigkeit gedichtet ist.

13. Nachrüstbarer Begrenzersatz zur Begrenzung des Schwenkbereichs eines schwenkbar auf einem Armaturenkorpus (1) befestigten Auslaufs (4), mit einer Überwurfmutter (10), mittels der der Auslauf (4) auf dem Armaturenkorpus (1) befestigbar ist und mit einem auf den Auslauf (4) aufschiebbaren Begrenzungsring (11), welcher drehfest an dem Auslauf (4) festlegbar ist, wobei der Begrenzungsring (11) und die Überwurfmutter (10) nur innerhalb eines durch an einander zugewandten Seiten der Überwurfmutter (10) und des Begrenzungsrings (11) angeordnete Anschlagkörper (13, 14) begrenzten Winkelbereichs gegeneinander verdrehbar sind, um den Schwenkbereich des Auslaufs (4) zu begrenzen.

## Claims

1. Kitchen tap having a tap body (1) and a spout (4) which is pivotally mounted on the tap body (1), and having a limiter ring (11) which is fixable on the spout (4) to rotate therewith in order to limit a pivot range of the spout (4) relative to the tap body (1),
**characterised in that**
the spout (4) is mounted on the tap body (1) by means of a cap nut (10), and the limiter ring (11) has been pushed onto the spout (4) and co-operates with the cap nut (10) in order to limit the pivot range.

2. Kitchen tap according to claim 1, wherein either on the cap nut (10) or on the limiter ring (11) there are provided a plurality of receptacles (10a) for selective insertion of at least one stop member (13), the pivot range being variable by selection of the receptacle (10a) for the at least one stop member (13).

3. Kitchen tap according to claim 1, wherein both on the cap nut (10) and on the side of the limiter ring (11) that faces the cap nut (10) there are provided stop members (13, 14) which are arranged to limit the pivot range of the spout (4) by forming a mutual end stop of the pivot range.

4. Kitchen tap according to claim 3, wherein both the cap nut (10) and the limiter ring (11) each have two complementary stop members (13, 14), and at least one of the stop members (13), preferably both stop members (13) located on the same component, are selectively insertable into selected receptacles (10a) of a plurality of receptacles (10a) arranged in a semi-circle in order to specify an angular range for the pivot range.

5. Kitchen tap according to any one of claims 2 to 4, wherein at least one of the stop members (13, 14) is in the form of a threaded pin which has been inserted into a receptacle (10a) provided with an internal thread.

6. Kitchen tap according to any one of the preceding claims, wherein the cap nut (10) is secured against unintentional twisting by means of a securing device, preferably a radially inserted securing screw (17).

7. Kitchen tap according to any one of the preceding claims, wherein the limiter ring (11), for fixing on the spout (4) to rotate therewith, has at least one, preferably two, securing screw(s) (16; 14) passing radially through the limiter ring (11).

8. Kitchen tap according to any one of claims 1 to 6, wherein the limiter ring has a slot running radially or obliquely in the direction of its internal circumference and, for fixing on the spout to rotate therewith, has a tensioning screw running through the slot.

9. Kitchen tap according to any one of the preceding claims, wherein the cap nut (10) holds the spout (4) against a seal (4c) located between the spout (4) and the tap body (1) and wherein on the cap nut (10) there are provided one or more adjusting screws (15) which pass through the cap nut (10) and with which a preset play of the seal can be readjusted by means of the cap nut (10).

10. Kitchen tap according to claim 9, wherein the seal (4c) is implemented as gland packing of a gland seal, preferably made of Teflon.

11. Kitchen tap according to any one of the preceding claims, having a rosette (12) which covers the cap nut (10) and the limiter ring (11).

12. Kitchen tap according to claim 11, wherein the rosette (12) is sealed against penetrating fluid with respect to the outlet (4) by means of a ring seal (12a), preferably an O-ring.

13. Retrofittable limiter set for limiting the pivot range of a spout (4) pivotally mounted on a tap body (1), having a cap nut (10) by means of which the spout (4) is mountable on the tap body (1), and having a limiter ring (11) which is arranged to be pushed onto the spout (4), which limiter ring is fixable on the spout (4) to rotate therewith, wherein the limiter ring (11) and the cap nut (10) are rotatable relative to one another only within an angular range limited by stop members (13, 14) which are arranged on mutually facing sides of the cap nut (10) and the limiter ring (11) in order to limit the pivot range of the spout (4).

## Revendications

1. Robinetterie de cuisine comprenant un corps de robinet (1), une sortie (4) fixée sur ledit corps de robinet (1) avec faculté de pivotement, et une bague de limitation (11) pouvant être consignée à demeure sur ladite sortie (4), avec verrouillage rotatif, afin de limiter une plage de pivotement de ladite sortie (4) par rapport audit corps de robinet (1),
**caractérisée par le fait que**
la sortie (4) est fixée sur le corps de robinet (1) au moyen d'un capuchon fileté (10) ; et **par le fait que** la bague de limitation (11) est enfilée sur ladite sortie (4) et coopère avec ledit capuchon fileté (10) en vue de limiter la plage de pivotement.

2. Robinetterie de cuisine selon la revendication 1, dans laquelle une pluralité de logements (10a) est prévue soit sur le capuchon fileté (10), soit sur la bague de limitation (11), en vue de l'insertion sélective d'au moins un corps de butée (13), la plage de pivotement pouvant être modifiée par sélection du logement (10a) affecté audit corps de butée (13) à présence minimale.

3. Robinetterie de cuisine selon la revendication 1, dans laquelle des corps de butée (13, 14), prévus aussi bien sur le capuchon fileté (10), que du côté de la bague de limitation (11) tourné vers ledit capuchon fileté (10), sont agencés afin de limiter la plage de pivotement de la sortie (4), du fait qu'ils forment une butée extrême de part et d'autre de ladite plage de pivotement.

4. Robinetterie de cuisine selon la revendication 3, dans laquelle aussi bien le capuchon fileté (10), que la bague de limitation (11), sont respectivement dotés de deux corps de butée (13, 14) concordants, et au moins l'un (13) desdits corps de butée, de préférence les deux corps de butée (13) situés sur la même pièce structurelle, peu(ven)t être sélectivement inséré(s) dans des logements (10a) sélectionnés au sein d'une pluralité de logements (10a) agencés sur une circonférence partielle, de manière à préétablir une plage angulaire assignée à la plage de pivotement.

5. Robinetterie de cuisine selon l'une des revendications 2 à 4, dans laquelle au moins l'un des corps de butée (13, 14) est réalisé sous la forme d'un mamelon fileté, introduit dans un logement (10a) pourvu d'un taraudage.

6. Robinetterie de cuisine selon l'une des revendications précédentes, dans laquelle une rotation involontaire du capuchon fileté (10) est interdite au moyen d'un dispositif d'arrêt, de préférence d'une vis d'arrêt (17) insérée dans le sens radial.

7. Robinetterie de cuisine selon l'une des revendications précédentes, dans laquelle la bague de limitation (11) comporte au moins une, de préférence deux vis d'arrêt (16 ; 17) qui traverse(nt) ladite bague de limitation (11) dans le sens radial, en vue de la consignation à demeure sur la sortie (4) avec verrouillage rotatif.

8. Robinetterie de cuisine selon l'une des revendications 1 à 6, dans laquelle la bague de limitation est fendue avec tracé radial ou à l'oblique en direction de son pourtour intérieur, et comporte une vis de serrage qui traverse la fente en vue de la consignation à demeure sur la sortie, avec verrouillage rotatif.

9. Robinetterie de cuisine selon l'une des revendications précédentes, dans laquelle le capuchon fileté (10) maintient la sortie (4) en applique contre une garniture d'étanchement (4c) interposée entre ladite sortie (4) et le corps de robinet (1) ; et dans laquelle une ou plusieurs vis de réglage (15), prévue(s) sur le capuchon fileté (10) et traversant ledit capuchon fileté (10), autorise(nt) le rattrapage d'un jeu d'étanchéité préréglé au moyen dudit capuchon fileté (10).

10. Robinetterie de cuisine selon la revendication 9, dans laquelle la garniture d'étanchement (4c) est réalisée en tant que garniture de presse-étoupe d'un joint d'étanchement à presse-étoupe, de préférence en Téflon.

11. Robinetterie de cuisine selon l'une des revendications précédentes, munie d'une rosette (12) coiffant le capuchon fileté (10) et la bague de limitation (11).

12. Robinetterie de cuisine selon la revendication 11, dans laquelle l'étanchéité de la rosette (12) à l'encontre d'une insinuation de liquide est assurée, par rapport à la sortie (4), au moyen d'une garniture annulaire d'étanchement (12a), préférentiellement d'une bague torique.

13. Ensemble limitateur réadaptable, conçu pour limiter la plage de pivotement d'une sortie (4) fixée sur un corps de robinet (1) avec faculté de pivotement, comprenant un capuchon fileté (10) au moyen duquel ladite sortie (4) peut être fixée sur ledit corps de robinet (1), et une bague de limitation (11) qui peut être enfilée sur la sortie (4) et peut être consignée à demeure sur ladite sortie (4) avec verrouillage rotatif, sachant que, pour limiter la plage de pivotement de ladite sortie (4), ladite bague de limitation (11) et ledit capuchon fileté (10) ne peuvent tourner, l'un par rapport à l'autre, qu'à l'intérieur d'une plage angulaire délimitée par des corps de butée (13, 14) disposés sur des côtés dudit capuchon fileté (10) et de ladite bague de limitation (11) qui se font mutuellement face.
